# EUROPÄISCHE PATENTSCHRIFT

(11) **EP 3 169 466 B1**
(45) Veröffentlichungstag und Bekanntmachung des Hinweises auf die Patenterteilung: **16.01.2019**
(21) Anmeldenummer: 15747973.4
(22) Anmeldetag: 30.06.2015
(51) Int. Cl.: B23B 51/04

(54) **VERFAHREN ZUM NEUBESTÜCKEN EINES EINLIPPENBOHRERS**
METHOD OF REFURBISHING A SINGLE-LIP DRILL
PROCÉDÉ DE REMISE À NEUF D'UN FORET À UNE LÈVRE

(30) Priorität: 16.07.2014 DE 102014110021
(43) Veröffentlichungstag der Anmeldung: 24.05.2017
(73) Patentinhaber: Botek Präzisionsbohrtechnik GmbH, 72585 Riederich (DE)
(72) Erfinder: HILLER, Jörg, 72664 Kohlberg (DE); WENZELBURGER, Jürgen, 72555 Metzingen (DE)
(74) Vertreter: Jakelski & Althoff Patentanwälte PartG mbB
(86) Internationale Anmeldenummer: PCT/DE2015/100268
(87) Internationale Veröffentlichungsnummer: WO 2016/008471

(56) Entgegenhaltungen:
- EP-A2- 1 518 626
- WO-A1-01/98022
- WO-A1-2004/056520
- WO-A1-2012/083908
- DE-A1- 10 351 327
- DE-U1-202004 013 616
- DE-U1-202005 016 055
- US-A1- 2002 009 340

## Beschreibung

Die Erfindung betrifft ein Verfahren zum Neubestücken eines Einlippenbohrers mit den Merkmalen des Oberbegriffs des Anspruchs 1.

### Stand der Technik

Tieflochbohrer aus Hartmetall sind im Stand der Technik weit verbreitet. Mit derartigen Tieflochbohrern können Bohrungen mit einem Durchmesser von 0,4 bis zu 100 Millimetern mit einem Verhältnis Bohrerlänge zu Durchmesser von bis zu 150:1 und im Einzelfall bis zu 300 mal Durchmesser Hublänge in einem Zug und teilweise sogar ins Volle, also ohne Vorbohren, gebohrt werden. Solche Werkzeuge werden unter anderem beispielsweise im Motorenbau eingesetzt zur Herstellung von Einspritzkanälen in Zylinderköpfen von Brennkraftmaschinen. Hier besteht die Anforderung, Bohrungen mit sehr kleinem Durchmesser und großer Bohrlänge zu fertigen. Sehr oft wird dabei mit hohem Vorschub ins Volle gebohrt. Dabei unterliegen der Bohrkopf und insbesondere die Bohrerspitze sehr hohen Belastungen. Er muss daher eine besondere Verschleißfestigkeit und Härte aufweisen. Der Schaft muss eine hohe Zähigkeit und Verwindungssteifigkeit aufweisen. Diese Anforderungen werden erfüllt durch Verwendung von Hartmetall sowohl für den Bohrschaft als auch für den Bohrkopf. Besonders vorteilhaft ist dabei vorgesehen, Bohrschaft und Bohrkopf aus dem gleichen Hartmetall zu fertigen, also den Tieflochbohrer als einstückiges Bauteil zu fertigen. Aufgrund der hohen Belastung während des Einsatzes dieser Tieflochbohrer verschleißen die Bohrköpfe.

Dies erfordert Nachschliffe, wobei jedoch die Anzahl der möglichen Nachschliffe begrenzt ist durch die Länge des Kopfteils, insbesondere aber durch die Konizität des Bohrkopfes. Ist die Mindestlänge des Werkzeugs erreicht, muss der einstückige Hartmetallteil (Kopf und Schaft) entsorgt werden, was besonders im Hinblick auf die teuren Rohstoffe, die für derartige Bohrer verwendet werden, und aus ökologischen Aspekten möglichst vermieden werden sollte.

Die DE 20 2005 016 055 A1 offenbart ein Verfahren zum Neubestücken eines Einlippenbohrers gemäß dem Oberbegriff des Anspruchs 1 und einen Tieflochbohrer mit einem Bohrerkopf und einem Bohrerschaft, sowie mit einer zwischen dem Bohrerkopf und dem Bohrerschaft ausgebildeten lösbaren Verbindung zum Anbringen und Entfernen des Bohrerkopfs vom Bohrerschaft. Dabei ist ein Zwischenstück zwischen dem Bohrerkopf und dem Bohrerschaft vorgesehen, an welchem auf der zum Bohrerkopf gerichteten Seite die lösbare Verbindung zwischen dem Zwischenstück und dem Bohrerkopf ausgebildet ist. Das Zwischenstück ist auf der zum Bohrerschaft gerichteten Seite fest mit dem Bohrerschaft verbunden. Eine unmittelbare Befestigung des Bohrkopfes an dem Bohrerschaft ist nicht vorgesehen.

Aus DE 2004 013 616 A1 geht ein Tieflochbohrer mit wechselbarem Bohrerkopf hervor, bei dem der Bohrerkopf auch nicht unmittelbar an dem Bohrerschaft befestigt wird, sondern die Zwischenschaltung einer "Schnittstelle" vorgesehen ist.

Aus der WO 2004/056520 A1, der US 2002/009340 A1 sowie der DE 103 51 327 A1 gehen zwar jeweils die Befestigung eines Bohrerkopfes an einem Schaft hervor, beispielsweise durch Hartlöten, es wird jedoch nicht beschrieben, dass der Bohrerkopf auch wieder von dem Schaft entfernt wird.

### Offenbarung der Erfindung

### Vorteile der Erfindung

Das erfindungsgemäße Verfahren zum Neubestücken eines derartigen Einlippenbohrers mit den Merkmalen des Anspruchs 1 weist demgegenüber den Vorteil auf, dass verschlissene Einlippenbohrer aus Hartmetall neu bestückt werden können und insoweit ihre Lebensdauer verlängert werden kann. Insbesondere müssen derartige Einlippenbohrer im Falle ihres Verschleißes nicht weggeworfen werden, sondern können zumindest zum Teil weiter verwendet werden. Das erfindungsgemäße Verfahren sieht dabei vor, den verschlissenen Hartmetallkopf von dem Schaft abzutrennen und im Anschluss daran einen neuen Hartmetallkopf stoffschlüssig auf dem Schaft zu befestigen.

Bevorzugte Ausgestaltungen des Verfahrens sind Gegenstand der auf den unabhängigen Anspruch rückbezogenen Unteransprüche. Die Befestigung des Bohrkopfes erfolgt durch Auflöten oder Kleben.

Rein prinzipiell können Schaft und Bohrkopf aus unterschiedlichem Hartmetall bestehen. Vorteilhafterweise ist vorgesehen, dass für den Schaft und den Bohrkopf das gleiche Hartmetall verwendet wird.

Dabei wird nach dem Abtrennen des verschlissenen Hartmetallkopfs von dem Schaft eine Löt- oder Klebeangel in den Schaft eingebracht. Die Befestigung des Bohrkopfes erfolgt durch Auflöten oder Kleben. Die Löt-/Klebeangel kann beispielsweise durch Einschleifen in den Schaft eingebracht werden. Gleichzeitig wird in dem Bohrkopf ein der Löt-/ Klebeangel gegengleiches Gegenstück vorgesehen. Aufgrund einer solchen Löt- oder Klebeangel ist eine besonders stabile und sichere Verbindung des Bohrkopfes und des Bohrschaftes möglich. Die Löt- und/oder Klebeangel weist beispielsweise eine im Wesentlichen in Axialrichtung ausgerichtete V-förmige Gestalt auf, wobei die V-förmige Gestalt einen Winkel von zwischen 50° und 100°, bevorzugt 60° oder 90° einschließt. Möglich ist es aber auch größere oder kleinere Winkel zu verwenden. Durch die Anwendung des erfindungsgemäßen Verfahrens verlängert sich die Verwendbarkeit des Einlippenbohrers erheblich. Ein verschlissener Vollmetall-Einlippenbohrer muss nicht mehr entsorgt werden, sondern kann erneut verwendet werden, nachdem ein neuer Bohrkopf auf den Schaft aufgelötet wurde. Dies ist nicht nur im Hinblick auf die Einsparung der für derartige Einlippenbohrer verwendeten teuren Rohstoffe, sondern insbesondere auch aus ökologischer Sicht sehr vorteilhaft. Es entsteht nicht nur weniger Abfall, sondern es können auch erhebliche Energiekosten, die mit der Neuherstellung derartiger Einlippenbohrer verbunden sind, deutlich reduziert werden.

### Kurze Beschreibung der Zeichnung

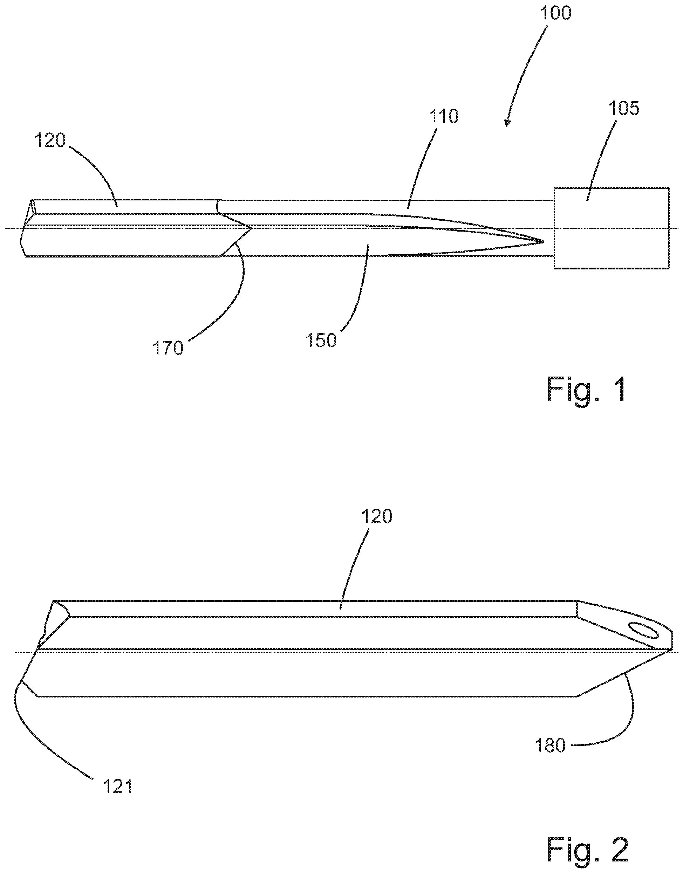

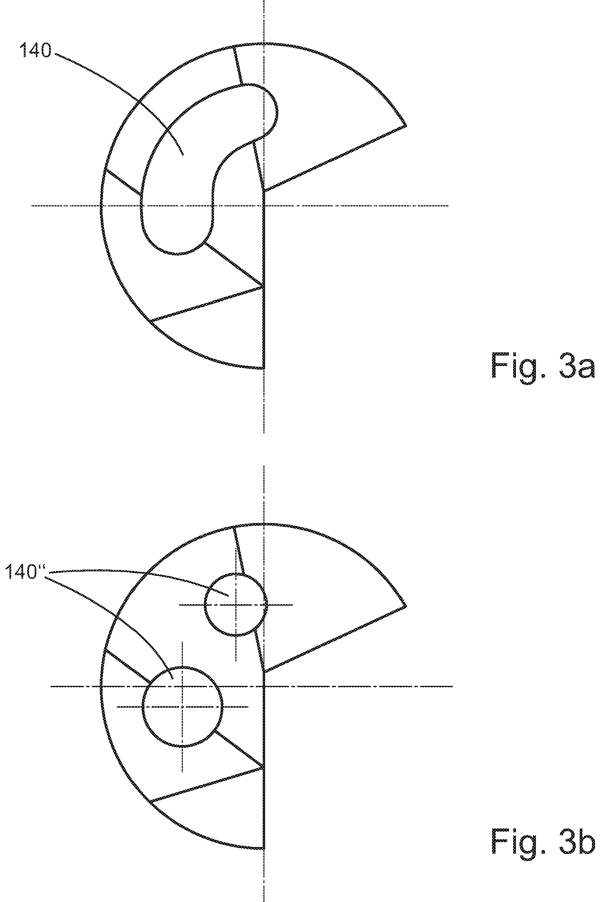

Ausführungsbeispiele der Erfindung sind in der Zeichnung dargestellt. Die Figur 1 zeigt eine schematische Darstellung eines Einlippenbohrers mit nach dem erfindungsgemäßen Verfahren aufgelöteter Spannhülse. In Figur 2 ist ein Hartmetall-Kopfrohling dargestellt, der bei dem in Figur 1 dargestellten Einlippenbohrer zum Einsatz kommt, und in Figur 3 sind jeweils Vorderansichten unterschiedlicher Ausführungsformen des in Figur 2 dargestellten Hartmetall-Kopfrohlings dargestellt.

### Ausführungsbeispiele der Erfindung

Ein in Fig. 1 dargestellter Einlippenbohrer 100, weist beispielsweise ein Einspannelement 105 auf. Mit dem Einspannelement 105 einstückig verbunden ist ein Schaft 110, auch Bohrschaft genannt. Es ist an dieser Stelle hervorzuheben, dass ein solches Einspannelement 105 optional ist. Es ist auch möglich, einen Vollhartmetall-Einlippenbohrer direkt am Schaft zu spannen. Mit dem Bohrschaft 110 einstückig verbunden ist ein Bohrkopf 120, der an seinem vorderen Ende eine Schneide aufweist. Sowohl in dem Schaft 110 als auch in dem Bohrkopf 120 ist eine Span-Nut 150 angeordnet. In dem Bohrkopf 120 und in dem Schaft 110 ist ferner ein Innenkühlkanal 140, 140" (Fig. 3) vorgesehen. Die bei der Zerspanung erzeugten Späne werden über ein mit hohem Druck dem Innenkühlkanal 140, 140" zugeführtes Kühlmittel durch die gerade Span-Nut 150 aus dem Bohrloch geschwemmt. Der Innenkühlkanal 140 kann eine Nierenform aufweisen (Fig. 3a). Hierdurch wird bei geringster Materialschwächung eine hohe Kühlmittelmenge und eine gute Innenkühlung realisiert. Der Innenkühlkanal 140 " kann auch eine Zwei-Lochform aufweisen, wie es in Figur 3b dargestellt ist.

Es existieren nun gelötete Einlippenbohrer mit Stahlschaft, beispielsweise Einlippenbohrer des Typs 110 der Anmelderin. Vollhartmetall-Einlippenbohrer, beispielsweise des Typs 113 der Anmelderin, werden bei besonders hoher Beanspruchung eingesetzt. - Derartige Vollhartmetall-Einlippenbohrer werden gewöhnlich als ein Bauteil realisiert. Im Fall eines Verschleißes wird der Bohrkopf nachgeschliffen. Dies ist jedoch nur eine begrenzte Zahl möglich, da jeder Schleifvorgang den Bohrkopf 120 verkürzt. Wenn ein Nachschleifen nicht mehr möglich ist wird der gesamte Einlippenbohrer unbrauchbar und muss weggeworfen werden. Das erfindungsgemäße Verfahren sieht nun vor, den Bohrkopf 120 im Falle seines Verschleißes von dem Schaft 110 abzutrennen, beispielsweise erstmalig durch Absägen. Sodann wird in den Schaft 110 eine Lötangel 170 eingebracht. Die Lötangel 170 wird beispielsweise durch Einschleifen in den Schaft 110 eingebracht. In dem Bohrkopf 120 wird hierzu ein gegengleiches Gegenstück 180 zu der Lötangel 170 angeordnet. Dabei sind Lötangel 170 und Gegenstück 180 so ausgebildet, dass eine möglichst große Oberfläche entsteht. Die Lötangel 170 und das entsprechende Gegenstück 180 weisen beispielsweise eine V-förmige Gestalt auf, wobei ein Winkel der beiden V-Flächen der Lötangel zwischen 50° und 100° verwendet wird (siehe Fig. 3a: 60°, Fig. 3b: 90°). Das "V" ist dabei in Axialrichtung ausgerichtet mit seiner Spitze zum Einspannelement 105 zeigend.

Statt einer Lötangel 170 kann auch eine entsprechende Klebeangel vorgesehen sein mit dem entsprechenden Gegenstück. In diesem Falle werden Bohrkopf 120 und Schaft 110 miteinander verklebt.
Sodann wird ein neuer Bohrkopf 120 beispielsweise durch induktives Hartlöten beziehungsweise Kleben auf den Bohrschaft 110 aufgebracht. Der Bohrkopf 120 und der Schaft 110 sind auf diese Weise einstückig miteinander verbunden, sie bestehen aus dem gleichen Hartmetall. Der Vorteil hierbei ist, dass der Bohrkopf 120 von dem Bohrschaft 110 abgelöst werden kann und ein neuer Bohrkopf 120 erneut auf den Schaft 110 aufgelötet oder geklebt werden kann. Der Bohrkopf 120 ist also stoffschlüssig und lösbar mit dem Bohrschaft 110 verbunden. Lösbar bedeutet also im Sinne vorliegender Anmeldung, dass er nach Entfernen von dem Bohrschaft 110 und nach Einbringen einer Lötangel/Klebeangel in den Bohrschaft 110 durch beispielsweise induktives Hartlöten/Kleben wiederum auf dem Bohrschaft 110 befestigt wird.

Ein solches Verfahren zurr Herstellung eines Einlippenbohrers ist insbesondere sowohl im Hinblick auf Materialeinsparungen als auch im Hinblick auf ökologische und damit letzten Endes auch auf ökonomische Aspekte sehr vorteilhaft. Die "Lebensdauer" eines derartigen Einlippenbohrers, der aus einem einzigen Hartmetall besteht, wird auf diese Weise erheblich dadurch verlängert, dass eine Trennung des verschlissenen Bohrkopfes 120 von dem Schaft 110 erfolgt und eine erneute Montage eines neuen Bohrkopfes 120 auf dem bestehenden Schaft 110 vorgenommen wird.

## Patentansprüche

1. Verfahren zum Neubestücken eines Einlippenbohrers, umfassend einen aus einem Hartmetall bestehenden Schaft (110) und einen mit diesem verbundenen, aus einem Hartmetall bestehenden Bohrkopf (120), mit den Schritten:
- Abtrennen eines verschlissenen Bohrkopfes (120) von dem Schaft (110) und
- stoffschlüssiges Befestigen eines neuen Bohrkopfes (120) an dem Schaft (110) durch Auflöten oder Kleben,
**dadurch gekennzeichnet, dass** nach dem Abtrennen des verschlissenen Bohrkopfes (120) von dem Schaft (110) eine Löt-/Klebeangel (170) in den Schaft (110) eingebracht wird.

2. Verfahren nach Anspruch 1, **dadurch gekennzeichnet, dass** für den Schaft (110) und den Bohrkopf (120) das gleiche Hartmetall verwendet wird.

3. Verfahren nach Anspruch 1, **dadurch gekennzeichnet, dass** das Einbringen der Löt-/Klebeangel (170) in den Schaft (110) durch Einschleifen erfolgt.

4. Verfahren nach Anspruch 1, **dadurch gekennzeichnet, dass** an dem neuen Bohrkopf ein gegengleiches Gegenstück zu der Löt-/Klebeangel (170) vorgesehen wird.

5. Verfahren nach Anspruche 4, **dadurch gekennzeichnet, dass** die Löt-/Klebeangel (170) und das Gegenstück so ausgebildet werden, dass eine möglichst große Verbindungsfläche entsteht.

## Claims

1. Method for reloading a single-flute drill, comprising a shaft (110) consisting of a carbide and a drill head (120) connected to this and consisting of a carbide (120), having the following steps:
- detaching a worn drill head (120) from the shaft (110) and
- integrally fixing a new drill head (120) to the shaft (110) by soldering or adhesion,
**characterised in that** a soldering/adhesion hinge (170) is inserted in the shaft (110) after detaching the worn drill head (120) from the shaft (110).

2. Method according to claim 1, **characterised in that** the same carbide is used for the shaft (110) and the drill head (120).

3. Method according to claim 1, **characterised in that** inserting the soldering/adhesion hinge (170) in the shaft (110) takes place by grinding it in.

4. Method according to claim 1, **characterised in that** a mirror-inverted counter-piece relative to the soldering/adhesion hinge (170) is provided on the new drill head.

5. Method according to claim 4, **characterised in that** the soldering/adhesion hinge (170) and the counter-piece are formed in such a way that as large a connection surface as possible arises.

## Revendications

1. Procédé de rééquipement d'un foret à une lèvre, comportant une tige (110) constituée d'un métal dur et une tête de forage (120) reliée à celle-ci constituée d'un métal dur, comprenant les étapes de :
- séparation d'une tête de forage (120) usée de la tige (110) et
- fixation par accouplement de matière d'une nouvelle tête de forage (120) sur la tige (110) par soudage ou collage,
**caractérisé en ce qu'**après la séparation de la tête de forage (120) usée de la tige (110) un tenon de soudage / collage (170) est introduit dans la tige (110).

2. Procédé selon la revendication 1, **caractérisé en ce que** le même métal dur est utilisé pour la tige (110) et la tête de forage (120).

3. Procédé selon la revendication 1, **caractérisé en ce que** l'introduction du tenon de soudage / collage (170) dans la tige (110) est effectuée par meulage.

4. Procédé selon la revendication 1, **caractérisé en ce qu'**une contre-pièce diamétralement opposée au tenon de soudage / collage (170) est disposée sur la nouvelle tête de forage.

5. Procédé selon la revendication 4, **caractérisé en ce que** le tenon de soudage / collage (170) et la contre-pièce sont formés de manière qu'une surface de liaison aussi large que possible est créée.
